# EUROPÄISCHE PATENTSCHRIFT

(11) **EP 0 803 476 B1**
(45) Veröffentlichungstag und Bekanntmachung des Hinweises auf die Patenterteilung: **06.05.1999**
(21) Anmeldenummer: 96106200.7
(22) Anmeldetag: 22.04.1996
(51) Int. Cl.: C02F 9/00, E03B 3/00, C02F 1/28, C02F 1/42, C02F 1/76, C02F 1/46, C02F 1/44, C02F 1/50

(54) **Nottrinkwasser-Aufbereitungsgerät**
Survival water supplier
Appareil pour fournir de l'eau de survie

(43) Veröffentlichungstag der Anmeldung: 29.10.1997
(73) Patentinhaber: Römer, Aziza, 40789 Monheim (DE)
(72) Erfinder: Römer, Heinz Günther, 40789 Monheim (DE)

(56) Entgegenhaltungen:
- FR-A- 2 644 812
- DATABASE WPI Section Ch, Week 9412 Derwent Publications Ltd., London, GB; Class D15, AN 94-092749 XP002011479 & BR-A-9 202 824 (ESTEFANO COHN P) , 25.Januar 1994

## Beschreibung

Die Erfindung betrifft ein Gerät, das aus ungenießbarem und gesundheitlich bedenklichem Wasser, hygienisch einwandfreies, entkeimtes, mikrogefiltertes, geruchsfreies und teilentsalztes Trinkwasser definierter Menge erzeugt, unter Verwendung von Solarenergie zur Erzeugung eines Oxydationsmittels zur Desinfektion des Rohwassers per Elektrolyse, und Durchströmung eines nachgeschalteten Aktivkohlefilter, sowie Ionenaustauscher.

Bei der Aufbereitung von Nottrinkwasser waren bislang große, mobile, technisch aufwendige und teure Anlagen mit Diesel-Notstromaggregaten, und unter Verwendung von Chlor als Desinfektionsmittel, erforderlich. Dazu gehört auch fachkundiges Bedienungs-Personal um diese Anlagen, die allerdings eine viel größere Kapazität haben, und für einen größeren Personenkreis ausgelegt sind, zu betreiben. Kleinere Systeme arbeiten hauptsächlich nach dem Osmose-Verfahren, wobei ein sehr hoher osmotischer Druck mittels Hochdruckpumpen erzeugt werden muß, um wirkungsvoll Mikroorganismen und Krankheitserreger zurückzuhalten. Der Nachteil solcher Systeme liegt darin, daß sich die feinporösen Membranen sehr schnell zusetzen und verkeimen. Andere einfachere Filtrationsverfahren haben den Nachteil, daß die Desinfektion mittels Chlortabletten oder ähnlichen chemischen flüssigen oder festen Zusatzstoffen vorgenommen werden muß, und die Gefahr einer Über- oder Unterdosierung gegeben ist, und je nach Salzgehalt des vorgefundenen Rohwassers, mit einer Geschmaksbeeinträchtigung zu rechnen ist.

Die Erfindung bezweckt eine automatische Lösung der komplexen Nottrinkwasseraufbereitungs-Probleme, die vom Betreiber keine besonderen Fachkenntnisse erfordert, unabhängig von elektrischer Versorgungsenergie und mitgeführten Desinfektionsmittel ist, wobei durch eine kombinierte Aufbereitungstechnik ein hygienisch zuverlässiges und ein relativ qualitativ hochwertiges Trinkwasser definierter Menge, (ca. 10-20 ltr./h) für einen kleinen Personenkreis zur Verfügung steht.

Diese Aufgabe wird erfindungsgemäß dadurch gelöst, daß in einen Rohwasser-Vorlagebehälter definierter Größe über einen Mehrschichtbett-Vorfilter, der auch schon über einen Anteil an Aktivkohle verfügt, verschmutztes und verseuchtes Wasser vorbehandelt, und bis zu einer Markierung eingefüllt wird. Eine in den Vorlagebehälter integrierte Elektrolysezelle erzeugt aus dem geringen. natürlichen oder zugesetztem Salzgehalt des Rohwassers, bei Anlegen einer modifizierten elektrischen Spannung definierter Zeitspanne, bezogen über eine Solar-Pufferbatterie, die über eine photovoltaische Solarzelle gespeist wird, Natriumhypochlorit (NaClO) in niedriger Konzentration, jedoch mit einem hohen Anteil an atomarem Sauerstoff, der im "status nascendi" vorliegt,. Damit ist eine sehr wirksame Desinfektion gewährleistet. Nach Ablauf der definierten Zeit wird eine elektrische Förderpumpe in Betrieb gesetzt, die das entkeimte Rohwasser durch einen Anschwemm-Mikro-Aktivkohlefilter drückt, der 99,9 % Partikel größer als 0,5 µ (1/2000 mm) zurückhält, sowie sämtliche Gerüche, unangenehmen Geschmack, Trübheit und Schmutz, Chlor und Chlorphenol, Zysten (Giardia, Entamoeba und Cryptosporidium), oxidiertes Eisen, Mangan, Blei und Schwefel, Algen , andere Kleinstorganismen und Asbestfasern.

Eine Verkeimung des Aktivkohlefilter wird bei dieser Erfindung durch die ständige Durchströmung von Rohwasser mit einem Überschuß an freiem Chlor, vermieden. Danach wird das Trinkwasser als Option und zur weiteren Verbesserung seiner Qualität über ein in Reihe geschalteten Kationen- /Anionenaustauscher geführt, der die Aufgabe hat, das zuvor desinfizierte (entkeimte) und filtrierte Wasser zu Entsalzen, was besonders bei Brakwasser oder Uferfiltrat zur deutlichen Geschmacksverbesserung führt. Das so aufbereitete Wasser ist kristallklar, hygienisch einwandfrei, gesundheitlich unbedenklich, frei von unangenehmen Gerüchen und geschmacksneutral. Das Gerät, bestehend aus seinen Einzelkomponenten und ist betriebsfertig in einer Metall-Transportbox fest montiert, und leicht zu transportieren.

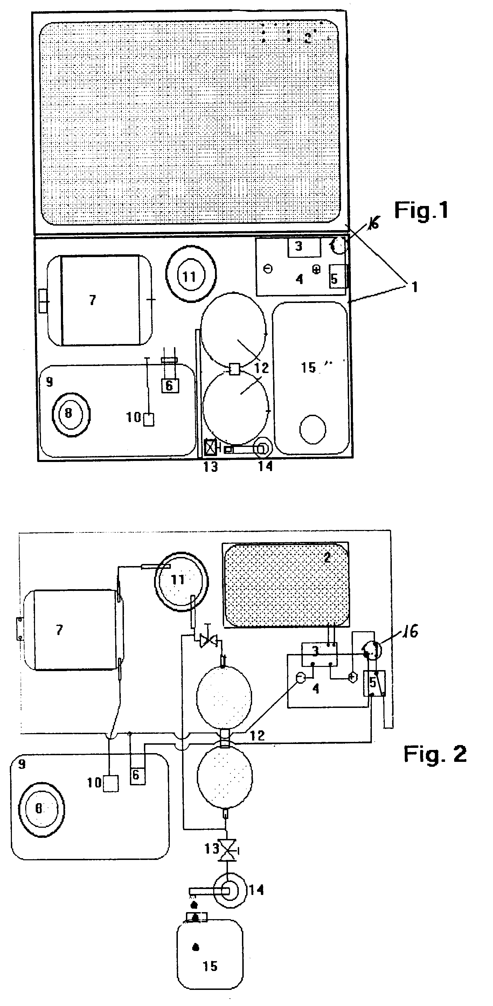

**Fig. 1** zeigt ein Beispiel für den Aufbau des erfindungsgemäßen Nottrinkwasser-Aubereitungsgerätes mit dem im Klappdeckel der Transportbox 1 integrieten Solarpaneel 2 (Photovoltaikzellen) zur autarken Stromversorgung, 3 einem Batterie-Laderegler, 4 einer 12 V Solarstrom-Pufferbatterie, 7 einer druckgesteuerten 12 V-Gleichstrompumpe, 6 einer Elektrolysezelle zur Erzeugung von NaClO, 8 einem Mehrschicht-Aktivkohle-Vortilter, 9 einem Rohwasser-Vorlagebehälter, 11 einem Aktivkohle-Anschwemmfilter, 14 einem Entnahme-Schwenkventil, 15 einem Abffüllkanister, 10 einem Fußfilter , 12 einem Kationen-/ Anionenaus-tauscher,13 einem Drosselventil, und 5 einem elektrischen Umschalter zwischen Elektrolysezelle und Wasserpumpe, 16 einem Stromunterbrecher bei geschlossenem Transportbox- Deckel.
**Fig. 2** zeigt ein Flußdiagramm und Blockschaltbild der erfindungsgemäßen Anordnung.

Die Transportbox 1 wird geöffnet und der Deckel mit dem integrierten Solarpaneell 2 wird auf die Sonne ausgerichtet. Bei dem photovoltaischen Verfahren wird nun Licht direkt in Strom umgesetzt, und lädt über den Laderegler 3 die Solarstrom-Pufferbatterie 4. Das verschmutzte und verseuchte Rohwasser, welches im Gelände vorgefunden wird, wird über den Mehrschicht-Aktivkohle-Vorfilter 8, in den Rohwasser-Vorlagebehälter 9 gefüllt. womit hierbei bereits grobe Verunreinigungen, größer 5 µ , zurückgehalten werden, und eine Vorentgiftung und Geruchsbefreiung stattfindet. Beim Einschlalten der 12 V Versorgungsspannung über den Umschalter 5 , wird die Elektrolysezelle 6 aktiviert und erzeugt aus gelöstem NaCl, Natriumhypochlorit (NaClO), welches bei gleichzeitiger Freisetzung von feinsten Wasserstoff-Bläschen an der Anode, eine gewollte Turbulenz und somit Vermischung des entstandenen Desinfektinsmittel mit dem Rohwasser gewährleistet. Nach einer definierten Einwirkzeit des Desinfektionsmittels werden Mikroorganismen , Eiweißverbindungen, Krankheitserreger etc,. durch Oxydation zerstört, und die Reststrukturen werden in einem gewollten Nebenenefekt der Wasserstoffbildung, durch Flotation an die Oberfläche des Rohwasser-Vorlagebehälters transportiert. Über das Fußventil 10 wird nach der Ablauf der Einwirkzeit, durch die 12 V- Pumpe 7, durch Umschaltung mittels elektrischem Umschalter 5, das nun keimfreie, mit einem Überschuß an freiem Chlor versehene Wasser, in den Anschwemm-Aktivkohlefilter 11 gedrückt, der nun alle Stoffe größer 0,5 µ zurückhält und den Überschuß an freiem Chlor, neben anderen eventuell noch vorhandenen aromatischen- oder Giftstoffen zu 99,9 % absorbiert.

Danach gelangt das bereits fertige Trinkwasser noch über einen als Option vorgesehenen Ionentauscher 12, bestehend aus Kationen-/ Anionenaustauscher, um noch vorhandenen Restsalze zur weiteren Geschmacksverbesserung zu entfernen. Über ein Drosselventil 13 kann die optimal zulässige Entnahmemenge in ltr./Minute, eingestellt werden. Beim Öffnen des Entnahme-Ventils 14 (Zapfstelle) wird der in der Pumpe 7 integrierte Druckschalter geschlossen und schaltet die Pumpe ein, die nun durch die Druckvorgabe den Durchfluß gewährleistet, und somit die Entnahme des aufbereiteten Trinkwassers mit ca. 1 ltr./Minute ermöglicht. Beim Schließen des Entnahme-Ventils 14, schaltet sich die Förderpumpe 7 automatisch ab. Beim Schließen des Deckels der Transportbox 1, wird die gesamte Stromzufuhr zu den Verbrauchern 4 und 5, über einen Kontaktschalter 16, unterbrochen.

## Patentansprüche

1. Nottrinkwasser-Aufbereitungsgerät (1) zur Versorgung mit hygienisch einwandfreiem, entkeimten, mikrogefilterten, geruchsfreiem und teilentsalztem Trinkwasser definierter Menge, unter Verwendung von Solarenergie mittels Photovoltaik-Zellen (2), einer Pufferbatterie (4), und einer Elektrolysezelle (6) zur Erzeugung von Natriumhypochlorit als Oxydationsmittel zur Desinfektion des Rohwassers und Mikro-Filtration mittels eines nachgeschalteten Aktivkohlefilters (11), sowie Entsalzung mittels Ionenaugtauscher (12), wobei ein kristallklares, entkeimtes, geruchsfreies und entgiftetes Trinkwasser erzeugt wird.

2. Nöttrinkwasser-Aufbereitungsgerät (1) nach Anspruch 1 mit Solarzellen (2), Pufferbatterie (4), Elektrolysezelle (6), elektrischer Förderpumpe (7), 0.5 µ Aktivkohle-Anschwemmfilter (11), und Ionenaustauscher (12) zur Teilentsalzung, dadurch gekennzeichnet, daß durch die Anordnung der einzelnen Komponenten (2,4, 5, 6,7,11, 12),
a) eine automatisch gesteuerte Desinfektion mit Flotation im Rohwasser, des Rohwasser-Vorlage behälters (9), unabhängig von externer Energie, abläuft,
b) eine nachgeschaltete Mikrofiltration im 0,5 µ- Anschwemm-Aktivkohlefilter (11), unter Vermeidung von Keimbildung durch Überschuß von freiem Chlor, automatisch erzeugt durch die Elektrohysezelle (6), erfolgt.
c) eine Teilentsalzung durch im Bypass nachgeschaltetem Ionenaustauscher (12), stattfindet.

## Claims

1. Survival water supplier (1) for the supply of hygienically unobjectionable, disinfected, micro-filtered, odourless and partially demineralized drinking water of defined quantity, by using solar energy via photovoltaic cells (2), a buffer battery (4) and an electrolysis cell (6) for the production of sodium hypochlorite as disinfecting agent, and micro-filtration by means of a downstreamend activated carbon filter (11), and de-mineralisation by means of an ion changer (12), whereby a crystal clear, disinfected, odourless and detoxified drinking water is produced.

2. Survival water supplier (1) according to claim 1 with solar cells (2), buffer battery (4), electrolysis cell (6), electrical feeding pump (7), 0,5µ activated carbon filter (11), and ion changer (12) for partial demineralisation, characterized in the way of arrangement of the single components ((2),(4),(5),(6),(7),(11),(12))
a) an automatically controlled disinfection process with flotation of the raw water in the raw water container (9) takes place independent of any external energy,
b) a downstreamed micro-filtration takes place in the 0,5µ pre-coated activated carbon filter (11), suppressing the generation of germs due to excess of free chlorine, that is automatically generated by the electrolysis cell (6),
c) a partial demineralisation takes place by means of a downstreamed bypassed ion-changer (12).

## Revendications

1. Appareil pour fourrnir de l'eau de survie (1) pour la livraison d'eau potable hyiéniquement parfaite, stérilisée, micro-filtrée, inodore et partiellement démineralisée, en quantité définie, en utilisant l'énergie solaire via cellules photovoltaïques (2) une batterie-tampon (4) et une cellule d'èlectrolyse (6) pour la production d'hypochlorite de sodium comme agent d'oxydation pour desinfecter l'eau brute et micro-filtration par moyen d'un filtre de charbon activé intercalé (11) et la déminéralisation par moyen d'echangeur d'ions (12) produisant ainsi une eau potable cristalline, desinfectée, inodore et désintoxitée.

2. Appareil pour fournire de l'eau de survie (1) d'aprés les revendications numéro 1 avec cellules solaires (2) batterie-tampon (4) cellule d'électrolyse (6), pompe d'alimentation electrique (7), filtre de charbon activé a couches 0,5 µ (11) et echangeur d'ions (12) pour la démineralisation partielle, caractérisé par le fait de la disposition des componants individuels ((2), (4), (5), (6), (7), (11), (12))
a.) qu'une désinfectation automatique controllée avec flottation dans l'eau brute du reservoir d'eau brute s'effectue indépendamment de l'energie externe,
b.) qu'une micro-filtration intercallée en arrière dans le filtre de charbon activé de 0,5 µ se produit tout en évitant une formation de germes par l'excédant du chlore libre qui est automatiquement produit par une cellule d'électrolyse (6).
c.) qu'une déminéralisation partielle s'effectue moyennant un échangeur d'ions intercalé en arrière (12) dans le régulateur by-pass.
